# NOUVEAU FASCICULE DE BREVET EUROPEEN

(11) **EP 2 906 467 B2**
(45) Date de publication et mention de la décision concernant l'opposition: **29.09.2021**
(45) Mention de la délivrance du brevet: 24.08.2016
(21) Numéro de dépôt: 13786687.7
(22) Date de dépôt: 08.10.2013
(51) Int. Cl.: B64C 11/06, F01D 5/08

(54) **HELICE COMPORTANT UNE ECOPE DYNAMIQUE MOBILE**
PROPELLER MIT EINER BEWEGLICHEN DYNAMISCHEN SCHAUFEL
PROPELLER COMPRISING A MOVABLE DYNAMIC SCOOP

(30) Priorité: 10.10.2012 FR 1259671
(43) Date de publication de la demande: 19.08.2015
(73) Titulaire: Safran Aircraft Engines, 75015 Paris (FR)
(72) Inventeur: CHARTIER, Sarah, F-77550 Moissy-Cramayel Cedex (FR); FABRE, Adrien, Jacques, Philippe, F-77550 Moissy-Cramayel Cedex (FR); IGEL, Dominik, F-77550 Moissy-Cramayel Cedex (FR); JACQUEMARD, Christophe, F-77550 Moissy-Cramayel Cedex (FR); TAJAN, Sébastien, F-77550 Moissy-Cramayel Cedex (FR)
(74) Mandataire: Brevalex
(86) Numéro de dépôt international: PCT/FR2013/052382
(87) Numéro de publication internationale: WO 2014/057199

(56) Documents cités:
- FR-A1- 2 645 499
- GB-A- 2 226 087
- US-A- 4 732 538
- US-A1- 2006 120 855

## Description

### DOMAINE TECHNIQUE

La présente invention se rapporte au domaine des turbomachines, notamment à celui des hélices non carénées pour turbomachine, et plus spécifiquement au refroidissement des éléments de ces hélices, en particulier les pieds de pales. Elle concerne ainsi une hélice pour turbomachine, et également la turbomachine comportant une telle hélice.

L'invention s'applique à tout type de turbomachines terrestres ou aéronautiques, et notamment aux turbomachines d'aéronef telles que les turboréacteurs et les turbopropulseurs. Plus particulièrement, l'invention trouve une application privilégiée dans le domaine des turbomachines pour aéronef dont le récepteur comporte un doublet d'hélices contrarotatives non carénées, ce type de turbomachine étant également dénommé « à soufflantes non carénées », ou portant encore les appellations anglaises « open rotor » ou « propfan ». Une telle turbomachine peut par exemple comporter une soufflante fixée directement sur la turbine de puissance et en dehors de la nacelle, ou entraînée par l'intermédiaire d'une turbine de puissance à réducteur. De façon générale, la turbomachine visée par l'invention peut préférentiellement être une turbomachine à soufflantes non carénées du type « geared » (avec boîtier de vitesse) ou encore du type « direct drive » (avec turbine libre de puissance).

### ÉTAT DE LA TECHNIQUE ANTÉRIEURE

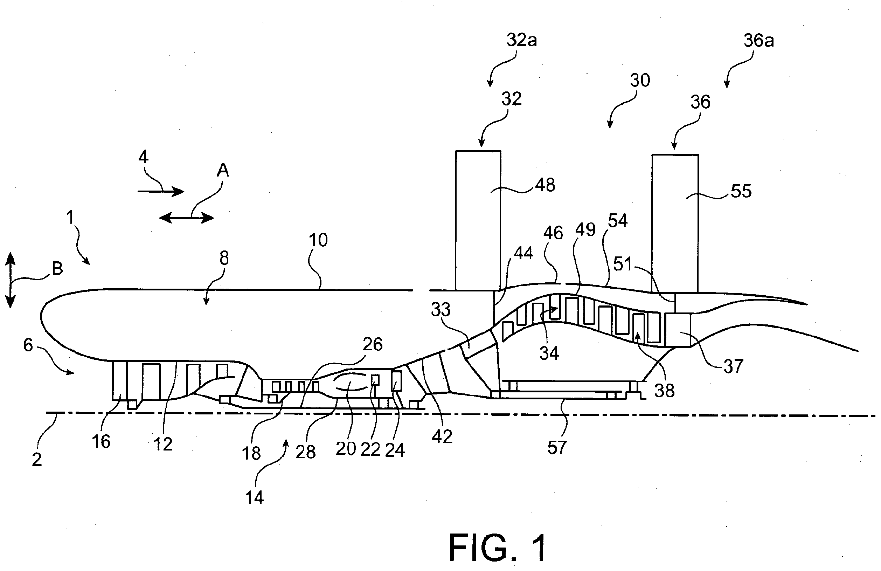

Sur la figure 1, il est représenté de façon schématique une turbomachine 1 à doublet d'hélices contrarotatives non carénées, dite « open rotor », selon une réalisation classique de l'art antérieur, telle qu'elle est connue de la demande de brevet FR 2 941494.

Sur cette figure 1, la direction A correspond à la direction longitudinale ou direction axiale, parallèle à l'axe longitudinal 2 de la turbomachine 1. La direction B correspond quant à elle à la direction radiale de la turbomachine 1. De plus, la flèche 4 schématise la direction principale d'écoulement des gaz à travers la turbomachine 1. Les termes « amont » et « aval » utilisés dans la suite de la description sont à considérer par rapport à cette direction d'écoulement des gaz 4.

En partie avant, la turbomachine 1 présente une entrée d'air 6 se poursuivant vers l'arrière par une nacelle 8, celle-ci comportant globalement une peau extérieure 10 et une peau intérieure 12, toutes les deux centrées sur l'axe 2 et décalées radialement l'une de l'autre.

La peau intérieure 12 forme carter radial externe pour un générateur de gaz 14, comprenant de façon classique, de l'avant vers l'arrière, un compresseur basse pression 16, un compresseur haute pression 18, une chambre de combustion 20, une turbine haute pression 22, et une turbine de pression intermédiaire 24. Le compresseur 16 et la turbine 24 sont reliés mécaniquement par un arbre 26, formant ainsi un corps basse pression, tandis que le compresseur 18 et la turbine 22 sont reliés mécaniquement par un arbre 28, formant un corps de pression plus élevée. Par conséquent, le générateur de gaz 14 présente de préférence une conception classique, dite à double corps.

En aval de la turbine de pression intermédiaire 24 se trouve un récepteur 30 à doublet d'hélices contrarotatives non carénées, entraînées dans cet exemple par des turbines libres de puissance. En variante, une turbine de puissance à réducteur peut être utilisée. Plus précisément, le récepteur 30 est disposé en aval d'un carter fixe 42, lui-même agencé dans le prolongement arrière du carter radial externe 12 du générateur de gaz 14. D'ailleurs, les carters 12 et 42 peuvent être réalisés d'une seule pièce. Le carter fixe 42 se prolonge ensuite vers l'arrière en se rétrécissant selon la direction radiale, pour former un arbre fixe 57 centré sur l'axe 2, formant le carter fixe du récepteur 30.

Le récepteur 30 comporte tout d'abord un premier ensemble tournant 32a muni d'une première hélice 32, d'une première turbine libre de puissance 34 entraînant cette hélice, et d'un premier dispositif structural tournant 33 situé dans le prolongement axial de la turbine libre 34 vers l'avant, en étant interposé entre le premier étage de cette turbine et le carter fixe 42. Le dispositif structural tournant 33 prend généralement la forme d'une pluralité de bras espacés circonférentiellement les uns des autres, et qui s'étendent radialement. Ces bras sont reliés à la première hélice 32 en portant le carter extérieur de turbine 49, lui-même relié à l'hélice 32 grâce en particulier à un flasque ou une pluralité de clips 44 permettant de déporter radialement cette hélice 32 vers l'extérieur. Les clips 44 présentent une extrémité radiale interne solidaire du carter extérieur 49, et une extrémité radiale externe solidaire d'un anneau polygonal (non représenté sur la figure 1) de support des pales 48. Ces pales 48 font saillie radialement vers l'extérieur à partir d'un carter ou capot extérieur d'hélice 46, dont l'une des particularités est de se trouver dans la continuité aérodynamique arrière de la peau extérieure 10 de la nacelle.

De manière analogue, le récepteur 30 comporte un second ensemble tournant 36a muni d'une seconde hélice 36, d'une seconde turbine libre de puissance 38 entraînant cette hélice, et d'un second dispositif structural tournant 37 situé dans le prolongement axial de la turbine libre 38 vers l'arrière, en étant situé derrière le dernier étage de cette turbine 38. Le dispositif structural tournant 37, qui s'étend essentiellement radialement, supporte la seconde hélice 36 en lui étant relié grâce en particulier à un flasque ou une pluralité de clips 51 permettant de déporter radialement l'hélice 36 vers l'extérieur. Ici également, les clips 51 présentent une extrémité radiale interne solidaire du carter structural tournant 37, et une extrémité radiale externe solidaire d'un anneau polygonal (non représenté sur la figure 1) de support des pales 55. Ces pales 55 font saillie radialement vers l'extérieur à partir d'un carter ou capot extérieur 54, qui se trouve dans la continuité aérodynamique arrière du capot extérieur 46 de la première hélice 32.

Par ailleurs, les première et seconde turbines libres 34, 38 sont imbriquées l'une dans l'autre de manière à former un doublet de turbines contrarotatives. Les étages de la première turbine 34 sont ainsi agencés en alternance avec les étages de la seconde turbine 38, dans la direction A. Ce doublet est donc également assimilable à une turbine à deux rotors contrarotatifs. A titre indicatif, les turbines libres 34, 38 ne disposent d'aucun lien mécanique direct avec les composants tournants du générateur de gaz 14, à savoir qu'elles n'entraînent ni ne sont entraînées par les éléments 16, 18, 22, 24. Seuls les gaz de la veine primaire s'échappant de la turbine de pression intermédiaire 24 assurent donc la mise en rotation de ces turbines libres 34, 38 formant le doublet de turbines contrarotatives.

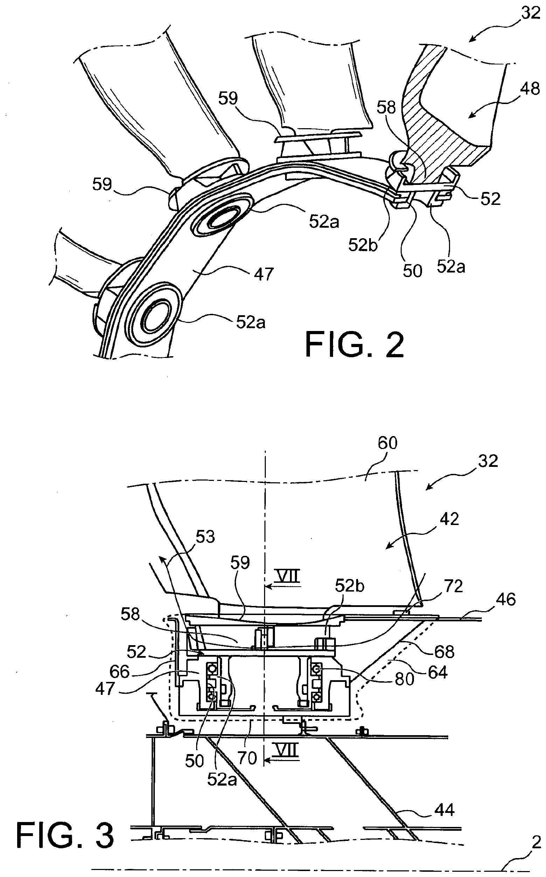

En référence à présent plus spécifiquement aux figures 2 à 4, il est montré de manière plus détaillée la conception de la première hélice 32, étant entendu que la seconde hélice 36 présente une conception identique ou similaire, et qu'elle ne sera donc pas davantage décrite.

Comme évoqué précédemment, l'hélice 32 comporte un anneau polygonal 47 servant de support des pales 48, cet anneau 47 formant un moyeu de l'hélice. Il comporte une pluralité de logements 50 espacés circonférentiellement les uns des autres, ces logements 50 étant dénommés logement radiaux. Chacun d'eux reçoit un pivot 52, un roulement 80 étant interposé entre ce pivot 52 et son logement associé 50 formant alésage, comme cela a été représenté sur la figure 3.

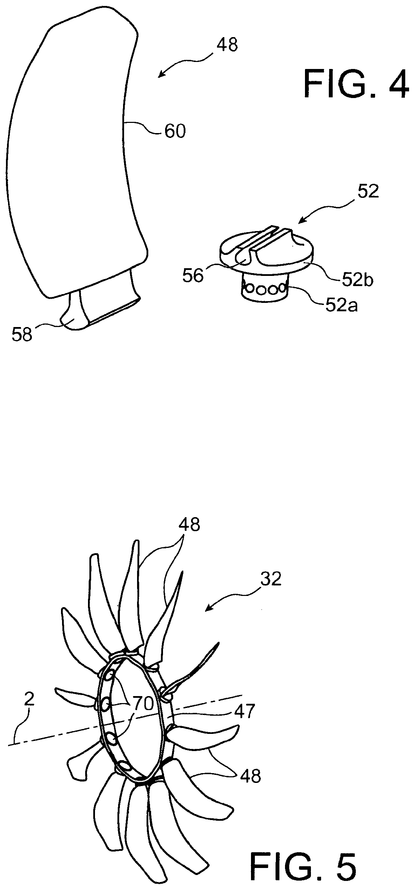

Chaque pivot 52 présente une partie inférieure 52a placée à l'intérieur de son logement associé, cette partie inférieure 52a étant sensiblement cylindrique et creuse de manière à présenter une section en forme générale de U ouvert radialement vers l'intérieur. De plus, le pivot 52 se prolonge radialement vers l'extérieur par une partie supérieure 52b située au-dessus de l'anneau 47, cette partie supérieure 52b présentant une rainure 56 schématisée sur la figure 4, et dont la fonction est de retenir le pied 58 de la pale associée 48. Ainsi, le pivot 52 porte la pale 48 et permet son calage en incidence par commande de la rotation de ce même pivot 52 au sein de son logement 50 de l'anneau polygonal 47.

L'hélice 32 inclut également le capot extérieur 46 uniquement représenté sur les figures 1 et 3. La surface externe de ce capot est épousée par l'air extérieur. A cet égard, il est indiqué que chaque pale 48 est équipée d'une plateforme 59 à partir de laquelle sa partie aérodynamique 60 fait saillie radialement vers l'extérieur. Chaque plateforme 59, de forme circulaire, se trouve placée au sein d'un orifice prévu à travers le capot 46, de manière à obtenir des jonctions aérodynamiques sensiblement affleurantes.

Comme cela est le mieux visible sur la figure 3, il est prévu une cavité de pale 64 associée à la pale 48, cette cavité ayant pour but d'isoler le pied de pale du reste de la turbomachine 1, en particulier de la veine primaire passant radialement vers l'intérieur. La cavité 64 a été identifiée schématiquement sur la figure 3 par la ligne en pointillés référencée 64. Elle est effectivement fermée radialement vers l'extérieur par la plateforme 59 et le capot extérieur 46 formant carénage aérodynamique, mais également fermée vers l'amont par un ou plusieurs caches 66, fermée vers l'aval par un ou plusieurs caches 68, et fermée radialement vers l'extérieur par un ou plusieurs caches 70, ici un unique cache 70 fixé au flasque ou aux clips 44 précités.

Il est noté qu'une cavité de pied de pale peut être prévue pour chaque pale, comme cela a été schématisé sur la figure 5 avec un cache interne 70 prévu pour chaque pale, ce qui rend les cavités indépendantes les unes des autres. Alternativement, une unique cavité de pieds de pales peut être partagée par toutes les pales 48 de l'hélice 32, l'unique cache interne 70 retenu prenant alors la forme d'une couronne.

Comme possibilité de ventilation, chaque cavité 64 peut par exemple être alimentée en air extérieur par une écope 72 ou similaire (par exemple un simple orifice), placée sur le capot extérieur 46. Cette écope peut notamment être placée en aval, et l'air transitant par la cavité 64 peut par exemple ensuite être extrait par une sortie (non représentée) située plus en amont. En transitant par la cavité 64, l'air extérieur frais vient épouser et refroidir par ventilation les éléments situés dans cette cavité 64, en particulier le pied 58 de la pale comme cela a été schématisé par la flèche 53.

La ventilation et le refroidissement des éléments de l'hélice 32, et en particulier des pieds de pale 58, sont difficiles à réaliser, notamment en raison des conditions de pression à faible nombre de Mach. Toutefois, une telle ventilation et un tel refroidissement sont particulièrement importants à mettre en oeuvre lorsque les pales 48 sont réalisées en matériaux composites, ayant une tenue réduite aux hautes températures en comparaison avec les matériaux métalliques. Or, dans la configuration représentée sur la figure 1 dite « pousseur» (ou « pusher » en anglais), dans laquelle les hélices non carénées sont situées à l'arrière en aval de la chambre de combustion, ces hélices sont agencées juste au-dessus de la veine primaire où les gaz chauds peuvent atteindre 500°C. Il est donc essentiel de prévoir une ventilation spécifique pour éviter une surchauffe des pieds de pale de ces hélices non carénées.

Néanmoins, la solution proposée décrite ci-dessus utilise uniquement la différence de pression entre la prise d'air dynamique en aval formée par l'écope 72, et la sortie d'air statique en amont. Elle est donc très dépendante de la vitesse de l'avion, ce qui s'avère néfaste lors de certaines phases comme le ralenti et le décollage, où le débit d'air épousant le pied de la pale peut s'avérer insuffisant pour permettre un refroidissement satisfaisant.

Par ailleurs, la présence constante d'une écope dynamique pour capter un flux d'air de ventilation conduit généralement à une augmentation de la traînée aérodynamique qui n'est pas non souhaitable, et ce d'autant plus que l'écope doit pouvoir se libérer de la couche limite. Or, le besoin maximal en apport d'air de ventilation n'est typiquement requis que lors de certaines phases bien précises de vol, notamment lors d'une phase de ralenti et/ou une phase de décollage. Ainsi, l'utilisation d'une écope dynamique fixe de façon permanente peut générer d'importantes contraintes dommageables en termes d'aérodynamisme et d'acoustique, lorsqu'elle est en usage en-dehors des points de fonctionnement pour lesquels elle est requise, notamment à faible vitesse et basse puissance. En terme d'aérodynamisme par exemple, une telle écope, prévue pour un faible nombre de Mach, va créer une traînée aérodynamique non négligeable lorsqu'à haut nombre de Mach. De même, en acoustique, une fois le point de fonctionnement requérant une forte ventilation dépassé, l'écope va venir « cisailler » la couche limite et générer du bruit. De plus, la vitesse en amont augmentant, le bruit généré sera de plus en plus important.

Par ailleurs, les documents GB 2 226 087 A, US 2006/120855 A1, FR 2 645 499 A1 et US 4,732,538 A illustrent également l'état de la technique antérieure.

### EXPOSÉ DE L'INVENTION

L'invention a ainsi pour but de remédier au moins partiellement aux besoins mentionnés ci-dessus et aux inconvénients relatifs aux réalisations de l'art antérieur.

L'invention a notamment pour but de proposer une solution pour permettre une ventilation et un refroidissement efficaces de pieds de pale, en particulier réalisés en matériaux composites. L'invention a également pour but de proposer une solution non génératrice d'effets dommageables et non souhaités en termes d'aérodynamisme et/ou d'acoustique.

L'invention a ainsi pour objet, selon l'un de ses aspects, une hélice pour turbomachine selon les caractéristiques de la revendication 1.

Par « position ouverte », on entend une position de l'écope dynamique dans laquelle elle permet la captation du flux d'air extérieur. L'écope dynamique peut être plus ou moins ouverte en fonction du calage de la pale. Par exemple, l'amplitude d'ouverture de l'écope peut être différente pour une phase de décollage et une phase de ralenti. De façon générale, on parle de « position ouverte » de l'écope dynamique lorsqu'il y a captation d'un flux d'air, l'amplitude d'ouverture de l'écope pouvant être variable.

Par « position fermée », on entend une position de l'écope dynamique dans laquelle elle ne permet pas la captation d'un flux d'air extérieur.

L'hélice peut en particulier être une hélice non carénée.

Le flux d'air est en particulier un flux d'air extérieur, notamment un flux d'air extérieur froid pour permettre une ventilation.

Grâce à l'invention, il peut être possible de ventiler et de refroidir les pieds de pale en amenant le flux d'air de ventilation directement au contact des pieds de pale. L'utilisation de l'écope dynamique peut dépendre directement de l'orientation de la pale, et donc de son calage. En particulier, la captation du flux d'air par l'écope dynamique peut n'être autorisée que pour certaines orientations de la pale, et donc pour certaines phases de vol par exemple. Ainsi, l'invention peut permettre le rajout d'une écope dynamique qui est utile pour certains points critiques de fonctionnement seulement et n'engendre pas de nuisances, notamment en termes d'aérodynamisme et/ou d'acoustique, pour les autres points de fonctionnement.

Dans la présente demande, la direction axiale correspond à la direction de l'axe de rotation X de la turbomachine, et une direction radiale est une direction perpendiculaire à l'axe X. Par ailleurs, les termes « intérieur » et « extérieur » sont utilisés en référence à une direction radiale de sorte que la partie intérieure (i.e. radialement intérieure) d'un élément est plus proche de l'axe X que la partie extérieure (i.e. radialement extérieure) du même élément.

L'hélice selon l'invention peut en outre comporter l'une ou plusieurs des caractéristiques suivantes prises isolément ou suivant toutes combinaisons techniques possibles.

La position ouverte de l'écope dynamique peut correspondre à une orientation prédéterminée de la pale. Avantageusement, la position ouverte de l'écope dynamique peut être obtenue lors d'une phase de vol à faible nombre de Mach, par exemple lors d'une phase de ralenti et/ou de décollage. La pale peut par exemple être orientée selon la position drapeau. En effet, lors d'une telle phase à faible puissance et faible vitesse, le besoin en débit d'air de ventilation est plus élevé, et ainsi l'écope dynamique est placée en position ouverte pour pouvoir capter le flux d'air extérieur de ventilation. L'invention peut ainsi permettre d'éviter le recours à une écope dynamique permanente, hors couche limite, qui lors d'une phase à haut nombre de Mach, par exemple en croisière, n'est pas nécessaire et génère par exemple une traînée aérodynamique importante.

Le passage de la position fermée à la position ouverte de l'écope dynamique peut être obtenu par l'effet centrifuge dû à la vitesse de rotation de la pale, lorsque la pale vient se positionner selon une orientation prédéterminée, notamment l'orientation ou position drapeau. La position ouverte de l'écope dynamique peut en particulier être obtenue par déploiement de l'écope dynamique, sous l'effet de la force centrifuge, au travers d'un orifice pratiqué dans le capot extérieur de l'hélice, comme décrit ci-après.

Le pivot peut être équipé d'au moins un système de contrepoids. Le passage de la position fermée à la position ouverte de l'écope dynamique peut être obtenu par un actionnement du système de contrepoids sur l'écope dynamique. En particulier, le système de contrepoids peut commander l'ouverture et/ou la fermeture de l'écope dynamique. La position ouverte de l'écope dynamique peut être obtenue par déploiement de l'écope dynamique, sous l'effet de l'action du système de contrepoids, au travers d'un orifice pratiqué dans le capot extérieur de l'hélice, comme décrit ci-après.

Le système de contrepoids peut typiquement être prévu pour permettre de ramener la pale dans une position prédéterminée, notamment la position drapeau.

Le système de contrepoids peut comporter un bras de contrepoids et un contrepoids. Le pivot peut être équipé de deux systèmes de contrepoids, comportant ainsi deux bras de contrepoids munis chacun d'un contrepoids.

Au moins un bras de contrepoids et/ou au moins un contrepoids peuvent être aptes à prendre appui sur l'écope dynamique, par exemple sur une partie spécifique de l'écope prévue à cet effet, pour l'amener de la position fermée à la position ouverte.

L'écope dynamique peut jouer le rôle d'un clapet fermé, apte à s'ouvrir par effet centrifuge et/ou par actionnement d'un système de contrepoids, pour permettre la captation d'un flux d'air de ventilation, et ainsi notamment le refroidissement du pied de pale.

L'hélice peut comporter un capot extérieur d'hélice à partir duquel les pales font saillie vers l'extérieur. Le capot peut comporter un orifice au travers duquel est apte à se déplacer l'écope dynamique pour passer de la position ouverte à la position fermée, et vice versa.

Autrement dit, la position fermée de l'écope dynamique peut correspondre à toute position dans laquelle l'écope dynamique est située radialement vers l'intérieur, sous le capot. La position ouverte de l'écope dynamique peut correspondre à une position dans laquelle l'écope dynamique s'étend au travers de l'orifice pratiqué dans le capot et émerge au-dessus du capot, radialement vers l'extérieur.

La mobilité de l'écope dynamique entre les positions ouverte et fermée peut être assurée par l'intermédiaire d'une liaison pivot. La liaison pivot peut permettre la rotation de l'écope dynamique pour passer de la position fermée à la position ouverte, et vice versa. La liaison pivot est par exemple une liaison charnière et/ou une liaison glissière.

Le pivot peut être associé à un anneau, solidaire du capot et portant l'écope dynamique. L'anneau peut s'étendre tout autour du pivot, étant notamment située radialement sous la plateforme du pivot. L'anneau et l'écope dynamique peuvent être situés radialement vers l'intérieur sous le capot.

L'hélice peut comporter un organe de rappel élastique, notamment un ressort élastique, apte à maintenir l'écope dynamique dans la position fermée. En particulier, l'organe de rappel élastique peut permettre de ramener et/ou maintenir l'écope dynamique dans la position fermée lorsque la pale quitte et/ou n'est pas dans une orientation prédéterminée pour laquelle une captation d'un flux d'air est souhaitée, en particulier pour la position drapeau.

Les pales, en particulier les pieds de pale, et/ou ledit au moins un système de contrepoids et/ou l'écope dynamique peuvent être réalisés en matériau composite.

Le bras de contrepoids du système de contrepoids peut comporter un canal intérieur d'écoulement du flux d'air.

Le canal intérieur d'écoulement du flux d'air peut permettre de refroidir le pied de pale porté par le pivot en acheminant le flux d'air depuis l'écope dynamique vers le pied de pale. Il peut également permettre le refroidissement de tout autre élément requérant une ventilation spécifique.

Le canal intérieur peut présenter une extrémité intérieure qui débouche sur le pivot et l'une au moins d'une extrémité d'introduction et d'une extrémité d'éjection du flux d'air. En particulier, le canal intérieur peut comporter une extrémité d'introduction du flux d'air et une extrémité intérieure débouchant sur le pivot pour refroidir le pivot. En variante, le canal intérieur peut comporter une extrémité intérieure débouchant sur le pivot, par laquelle entre l'air chaud depuis le pivot vers le canal intérieur, et une extrémité d'éjection pour évacuer l'air chaud.

Le pivot peut comporter au moins un canal intérieur communiquant dont une extrémité débouche au niveau du pied de pale et l'autre extrémité débouche au niveau d'un canal intérieur du système de contrepoids.

L'hélice peut encore comporter un canal d'écoulement prévu entre l'écope dynamique et le pivot pour acheminer le flux d'air de refroidissement depuis l'écope dynamique vers le pivot. Le pivot peut par exemple comporter un canal intérieur communiquant dont une extrémité débouche au niveau du pied de pale et l'autre extrémité débouche au niveau d'un tel canal d'écoulement.

L'invention a encore pour objet, selon un autre de ses aspects, une turbomachine caractérisée en ce qu'elle comporte une hélice telle que définie précédemment.

L'hélice peut par exemple se situer en amont ou en aval d'une chambre de combustion de la turbomachine.

La turbomachine peut préférentiellement être du type « open rotor ». En particulier, la turbomachine peut comporter un doublet d'hélices contrarotatives non carénées, chacune des deux hélices étant une hélice telle que définie précédemment.

### BRÈVE DESCRIPTION DES DESSINS

L'invention pourra être mieux comprise à la lecture de la description détaillée qui va suivre, d'exemples de mise en oeuvre non limitatifs de celle-ci, ainsi qu'à l'examen des figures, schématiques et partielles, du dessin annexé, sur lequel :
- la figure 1 représente une vue schématique en demi-coupe longitudinale d'une turbomachine pour aéronef comportant un récepteur à doublet d'hélices contrarotatives, selon une conception classique de l'art antérieur,
- la figure 2 représente une vue partielle en perspective de l'une des hélices contrarotatives de la turbomachine montrée sur la figure 1,
- la figure 3 représente une vue partielle en coupe montrant de manière plus détaillée l'anneau de support des pales de l'hélice, et les éléments environnants,
- la figure 4 représente une vue éclatée en perspective d'une pale et de son pivot associé,
- la figure 5 représente une vue en perspective d'une hélice de l'art antérieur, équipée de plusieurs cavités de pieds de pales,
- les figures 6, 7A et 7B illustrent partiellement, en perspective et en coupe, un exemple de mise en oeuvre de l'invention,
- la figure 8 représente, en perspective, un exemple d'écope dynamique pour une hélice selon l'invention, et
- la figure 9 illustre, en coupe et partiellement, un autre exemple de réalisation selon l'invention.

Dans l'ensemble de ces figures, des références identiques peuvent désigner des éléments identiques ou analogues.

De plus, les différentes parties représentées sur les figures ne le sont pas nécessairement selon une échelle uniforme, pour rendre les figures plus lisibles.

### EXPOSÉ DÉTAILLÉ DE MODES DE RÉALISATION PARTICULIERS

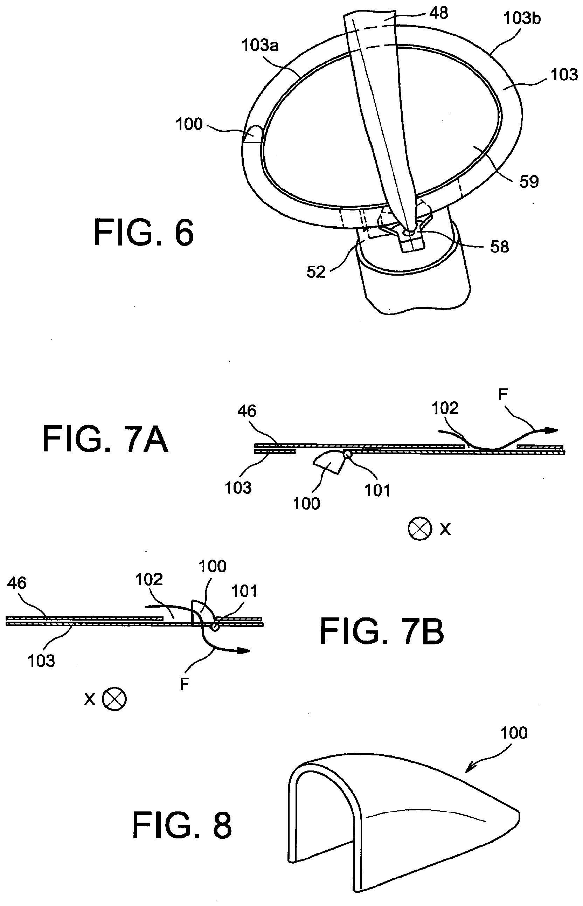

Il va être décrit ci-après, en référence aux figures 6 à 9, deux exemples de réalisation de l'invention se rapportant à une turbomachine d'aéronef à doublet d'hélices contrarotatives non carénées, ces exemples n'étant toutefois pas limitatifs.

Les figures 6 à 9 sont schématiques et partielles, et il convient de se référer aux figures 1 à 5 précédemment décrites pour la visualisation des éléments non représentés sur les figures 6 à 9.

En référence aux figures 6, 7A et 7B, on a illustré un premier exemple de réalisation d'une hélice 32 selon l'invention.

Les figures 7A et 7B illustrent respectivement, en coupe, une configuration de l'hélice dans laquelle l'écope dynamique 100 est dans une position fermée et une configuration de l'hélice dans laquelle l'écope dynamique 100 est dans une position ouverte, permettant la captation d'un flux d'air F de refroidissement.

Sur la figure 6 est représenté schématiquement un pivot 52 portant le pied de pale 58 d'une pale 48 de l'hélice 32.

Le pivot 52 comporte une plateforme 59, destinée à être placée au sein d'un orifice prévu à travers le capot extérieur d'hélice 46 (non visible sur la figure 6) de manière à obtenir des jonctions aérodynamiques sensiblement affleurantes.

Un anneau 103, situé radialement vers l'intérieur par rapport à la plateforme 59, est associé au pivot 52. En particulier, l'anneau 103 est lié au pivot 52 du pied de pale 58 par l'intermédiaire de ses deux extrémités concentrique 103a et excentrique 103b reliées au capot 46, par exemple par des joints dynamiques. Ainsi, l'anneau 103 est situé sous le capot 46, radialement vers l'intérieur par rapport au capot 46.

Conformément à l'invention, le pivot 52 est associé à une écope dynamique 100, solidaire de l'anneau 103 mobile.

Plus particulièrement, l'écope dynamique 100 est reliée à l'anneau 103 par une liaison pivot 101 (voir les figures 7A et 7B), et notamment une liaison charnière, qui permet le déplacement de l'écope dynamique 100 entre les deux positions ouverte et fermée. La liaison charnière 101 est notamment rectiligne afin de pouvoir permettre le mouvement de l'écope dynamique 100.

La position fermée de l'écope dynamique 100 correspond à une position dans laquelle l'écope dynamique 100 est située sous le capot 46, comme représenté sur la figure 7A. Dans cette position, le flux d'air F ne parvient pas au contact du pied de pale 58.

La position ouverte de l'écope dynamique 100 correspond à une position dans laquelle l'écope dynamique 100 est située au-dessus du capot 46 pour permettre la captation du flux d'air F de refroidissement, comme représenté sur la figure 7B.

Sur les figures 7A et 7B, seuls le capot 46, l'écope dynamique 100 et l'anneau 103 sont représentés pour plus de facilité de compréhension. L'axe de rotation X de la turbomachine 1 est perpendiculaire au plan des figures 7A et 7B.

Le capot 46 comporte un orifice 102 au travers duquel est apte à se déplacer l'écope dynamique 100 pour passer de la position ouverte à la position fermée, et vice versa.

Dans la configuration de la figure 7A, l'écope dynamique 100 est dans la position fermée et située sous le capot 46. Lorsque la pale 48 est calée dans une position prédéfinie, par exemple la position drapeau, qui peut être une position correspondant à une phase de ralenti et/ou de décollage, l'écope dynamique 100 se retrouve alignée avec l'orifice 102, juste au-dessous de l'orifice 102, et s'ouvre pour passer dans la position ouverte par effet centrifuge (configuration de la figure 7B). L'ouverture de l'écope dynamique 100 par effet centrifuge permet alors l'introduction du flux d'air de refroidissement F pour permettre le refroidissement du pied de pale 58.

Plus spécifiquement, le flux d'air de refroidissement F peut être acheminé dans une cavité de pale 64 associée à la pale 48, comme décrit précédemment, ou encore par exemple directement sous le pied de pale 58, au moyen notamment d'un canal d'écoulement prévu entre l'écope dynamique 100 et le pivot 52 pour permettre l'acheminement du flux d'air de refroidissement F depuis l'écope dynamique 100 vers le pivot 52.

Le pivot 52 peut dans ce cas comporter un canal intérieur communiquant dont une extrémité débouche au niveau du pied de pale 52 et l'autre extrémité débouche au niveau d'un tel canal d'écoulement.

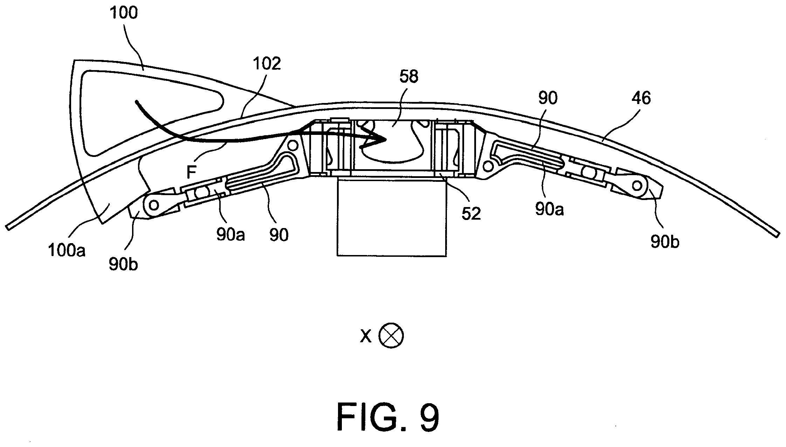

Par ailleurs, pour le cas où le pivot 52 est équipé d'un système de contrepoids 90, comme décrit en référence à la figure 9, un canal intérieur d'écoulement du flux d'air de refroidissement F peut être prévu dans le bras de contrepoids 90a du système de contrepoids 90 pour permettre l'acheminement du flux d'air F depuis l'écope dynamique 100 jusqu'au pied de pale 58.

La figure 8 représente en perspective un exemple d'écope dynamique 100 pouvant être utilisée dans une hélice 32 selon l'invention.

Sur la figure 9, on a illustré en coupe un deuxième exemple de réalisation selon l'invention.

Dans cet exemple, le pivot 52 est équipé de deux systèmes de contrepoids 90, pourvu chacun d'un bras de contrepoids 90a et d'un contrepoids 90b. Le contrepoids 90b peut par exemple être réalisé en tungstène.

Le passage de la position fermée à la position ouverte de l'écope dynamique 100 peut être obtenu par actionnement du système de contrepoids 90, par exemple par le biais du contrepoids 90b, sur l'écope dynamique 100. Plus précisément, le système de contrepoids 90 est apte à appuyer sur une partie spécifique 100a de l'écope dynamique 100 pour amener l'écope dynamique 100 dans la position ouverte lorsque la pale 48 est amenée dans une orientation prédéfinie, notamment par l'intermédiaire d'un ou des systèmes de contrepoids 90, autrement dit lorsque l'écope dynamique 100 arrive au niveau de l'orifice 102 pratiquée dans le capot 46.

Lorsque l'écope dynamique 100 est dans la position fermée ou quitte la position ouverte pour arriver dans la position fermée, un ressort élastique de rappel (non représenté), solidaire de l'écope dynamique 100, peut être utilisé pour amener et maintenir l'écope dynamique 100 dans la position fermée.

Une fois le flux d'air F ayant ventilé le pied de pale 58 pour permettre son refroidissement, il peut être éjecté.

Des moyens d'éjection du flux d'air peuvent aussi être prévus, en tenant compte notamment de la position de calage de la pale 48 et du besoin de ventilation maximale afin de ne pas rendre le refroidissement moins efficace par l'ingestion d'air éjecté dans une écope dynamique d'introduction d'un flux d'air de ventilation.

Dans tous les exemples précédemment décrits, les pales 48, et notamment les pieds de pale 58, et/ou les systèmes de contrepoids 90 et/ou l'écope dynamique 100 peuvent être réalisés en matériau composite.

Bien entendu, l'invention n'est pas limitée aux exemples de réalisation qui viennent d'être décrits. Diverses modifications peuvent y être apportées par l'homme du métier.

En particulier, les positions ouverte et fermée de l'écope dynamique 100 peuvent être obtenues autrement que par une liaison pivot, et notamment la liaison charnière 101. Le cheminement du flux d'air F depuis l'écope dynamique 100 vers le pied de pale 58 peut être envisagé de différentes manières.

L'expression « comportant un » doit être comprise comme étant synonyme de « comportant au moins un », sauf si le contraire est spécifié.

## Revendications

1. Hélice (32) pour turbomachine (1), apte à être entraînée par une turbine libre de puissance ou une turbine de puissance à réducteur, comportant une pluralité de pales (48), **caractérisée en ce qu'**elle comporte en outre un anneau de support de pales (47) pourvu de logements (50) recevant chacun un pivot (52) portant le pied (58) de l'une desdites pales (48),
et **en ce qu'**au moins l'un des pivots (52) est associé à au moins une écope dynamique (100), apte à être mobile entre des positions distinctes ouverte, permettant la captation d'un flux d'air (F) de refroidissement, et fermée en fonction de l'orientation de la pale (48) correspondante.

2. Hélice selon la revendication 1, **caractérisée en ce que** le passage de la position fermée à la position ouverte de ladite au moins une écope dynamique (100) est obtenu par l'effet centrifuge dû à la vitesse de rotation de la pale (48), lorsque la pale (48) vient se positionner selon une orientation prédéterminée.

3. Hélice selon la revendication 1 ou 2, **caractérisée en ce que** le pivot (52) est équipé d'au moins un système de contrepoids (90), le passage de la position fermée à la position ouverte de ladite au moins une écope dynamique (100) étant obtenu par un actionnement dudit au moins un système de contrepoids (90) sur ladite au moins une écope dynamique (100).

4. Hélice selon la revendication 3, **caractérisée en ce que** le système de contrepoids (90) comporte un bras de contrepoids (90a) et un contrepoids (90b), le bras de contrepoids (90a) et/ou le contrepoids (90b) étant aptes à prendre appui sur ladite au moins une écope dynamique (100) pour l'amener de la position fermée à la position ouverte.

5. Hélice selon l'une quelconque des revendications précédentes, **caractérisée en ce qu'**elle comporte un capot extérieur d'hélice (46) à partir duquel les pales (48) font saillie vers l'extérieur, le capot (46) comportant un orifice (102) au travers duquel est apte à se déplacer ladite au moins une écope dynamique (100) pour passer de la position ouverte à la position fermée, et vice versa.

6. Hélice selon l'une quelconque des revendications précédentes, **caractérisée en ce que** la mobilité de ladite au moins une écope dynamique (100) entre les positions ouverte et fermée est assurée par l'intermédiaire d'une liaison pivot (101), notamment une liaison charnière.

7. Hélice selon l'une quelconque des revendications précédentes, **caractérisée en ce qu'**elle comporte un capot extérieur d'hélice (46) à partir duquel les pales (48) font saillie vers l'extérieur, et **en ce que** le pivot (52) est associé à un anneau (103), solidaire du capot (46) et portant ladite au moins une écope dynamique (100), l'anneau (103) et ladite au moins une écope dynamique (100) étant situés radialement vers l'intérieur sous le capot (46).

8. Hélice selon l'une quelconque des revendications précédentes, **caractérisée en ce qu'**elle comporte un organe de rappel élastique apte à maintenir ladite au moins une écope dynamique (100) dans la position fermée.

9. Turbomachine (1) **caractérisée en ce qu'**elle comporte une hélice (32) selon l'une quelconque des revendications précédentes.

10. Turbomachine selon la revendication 9, **caractérisée en ce que** ladite hélice (32) se situe en aval d'une chambre de combustion (20) de ladite turbomachine, ladite turbomachine comportant de préférence un doublet d'hélices contrarotatives non carénées, chacune des deux hélices (32, 36) étant une hélice selon l'une quelconque des revendications 1 à 8.

## Patentansprüche

1. Propeller (32) für eine Turbomaschine (1), der von einer freien Kraft Turbine oder einer Reduktionskraft Turbine angetrieben werden kann, mit einer Vielzahl von Flügeln (48) sowie einem Flügelstützring (47), der mit Aufnahmen (50) versehen ist, welche jeweils einen Drehzapfen (52) aufnehmen, der den Fuß (58) eines dieser Flügel (48) trägt,
**dadurch gekennzeichnet, dass** mindestens einer der Drehzapfen (52) mit mindestens einer dynamischen Schaufel (100) verbunden ist, die zwischen verschiedenen Stellungen beweglich sein kann, nämlich einer offenen Stellung, die das Einfangen eines Kühlungsluftstromes (F) ermöglicht, und einer geschlossenen Stellung in Abhängigkeit der Ausrichtung des entsprechenden Flügels (48).

2. Propeller nach Anspruch 1, **dadurch gekennzeichnet, dass** der Übergang von der geschlossenen Stellung in die offene Stellung der mindestens einen dynamischen Schaufel (100) durch die Zentrifugalwirkung erzielt wird, die von der Drehgeschwindigkeit des Flügels (48) herrührt, wenn sich der Flügel (48) gemäß einer vorgegebenen Ausrichtung positioniert hat.

3. Propeller nach Anspruch 1 oder 2, **dadurch gekennzeichnet, dass** der Drehzapfen (52) mit mindestens einem Gegengewichtsystem (90) ausgerüstet ist, wobei der Übergang von der geschlossenen Stellung in die offene Stellung der mindestens einen dynamischen Schaufel (100) durch eine Betätigung des mindestens einen Gegengewichtsystems (90) auf der mindestens einen dynamischen Schaufel (100) erzielt wird.

4. Propeller nach Anspruch 3, **dadurch gekennzeichnet, dass** das Gegengewichtsystem (90) einen Gegengewichtsarm (90a) und ein Gegengewicht (90b) aufweist, wobei sich der Gegengewichtsarm (90a) und/oder das Gegengewicht (90b) auf die mindestens eine dynamische Schaufel (100) stützen können, um diese aus der geschlossenen Stellung in die offene Stellung zu bringen.

5. Propeller nach einem der vorhergehenden Ansprüche, **dadurch gekennzeichnet, dass** er eine äußere Propellerabdeckung (46) aufweist, aus welcher die Flügel (48) nach außen hervorstehen, wobei die Abdeckung (46) eine Öffnung (102) aufweist, durch die hindurch sich die mindestens eine dynamische Schaufel (100) verschieben kann, um aus der offenen Stellung in die geschlossene Stellung überzugehen und umgekehrt.

6. Propeller nach einem der vorhergehenden Ansprüche, **dadurch gekennzeichnet, dass** die Beweglichkeit der mindestens einen dynamischen Schaufel (100) zwischen der offenen und der geschlossenen Stellung mit Hilfe einer Schwenkverbindung (101), insbesondere einer Gelenkverbindung, gewährleistet ist.

7. Propeller nach einem der vorhergehenden Ansprüche, **dadurch gekennzeichnet, dass** er eine äußere Propellerabdeckung (46) aufweist, aus der die Flügel (48) nach außen hervorstehen, und dass der Drehzapfen (52) mit einem Ring (103) verbunden ist, der fest mit der Abdeckung (46) verbunden ist und die mindestens eine dynamische Schaufel (100) trägt, wobei sich der Ring (103) und die mindestens eine dynamische Schaufel (100) radial nach innen unter der Abdeckung (46) befinden.

8. Propeller nach einem der vorhergehenden Ansprüche, **dadurch gekennzeichnet, dass** er ein elastisches Rückstellelement umfasst, das in der Lage ist, die mindestens eine dynamische Schaufel (100) in der geschlossenen Stellung zu halten.

9. Turbomaschine (1), **dadurch gekennzeichnet, dass** sie einen Propeller (32) nach einem der vorhergehenden Ansprüche umfasst.

10. Turbomaschine nach Anspruch 9, **dadurch gekennzeichnet, dass** sich der Propeller (32) unterhalb einer Verbrennungskammer (20) der Turbomaschine befindet, wobei die Turbomaschine vorzugsweise zwei gegenläufige, nicht stromlinienförmige Propeller umfasst, wobei jeder der beiden Propeller (32, 36) ein Propeller nach einem der Ansprüche 1 bis 8 ist.

## Claims

1. Propeller (32) for a turbomachine (1), capable of being driven by a free power turbine or by a reductor power turbine, comprising a plurality of blades (48) and a blade support ring (47) fitted with housings (50) each of which holds a pivot (52) supporting the root (58) of one of said blades (48), **characterized by** the fact that at least one of the pivots (52) is associated with at least one dynamic scoop (100), capable of moving between distinct positions, an open position in which a cooling airflow (F) can be captured, and a closed position as a function of the orientation of the corresponding blade (48).

2. Propeller according to claim 1, **characterized by** the fact that said at least dynamic scoop (100) is moved from the closed position to the open position by a centrifugal effect due to the rotation speed of the blade (48), when the blade (48) moves into a position at a predetermined orientation.

3. Propeller according to claim 1 or 2, **characterized by** the fact that the pivot is provided with at least one counterweight system (90), the movement from the closed position to the open position of said at least dynamic scoop (100) being obtained by actuation of said at least counterweight system (90) on said at least dynamic scoop (100).

4. Propeller according to claim 3, **characterized by** the fact that the counterweight system (90) comprises a counterweight arm (90a) and a counterweight (90b), the counterweight arm (90a) and/or the counterweight (90b) being capable of bearing on said at least dynamic scoop (100) to move it from the closed position to the open position.

5. Propeller according to any preceding claim, **characterized by** the fact that it comprises an outer propeller cover (46) from which the blades (48) will project outwards, the cover (46) comprising an orifice (102) through which said at least dynamic scoop (100) is moved from the open position to the closed position and vice versa.

6. Propeller according to any preceding claim, **characterized by** the fact that said at least dynamic scoop (100) is free to move between the open and closed positions through a pivot connection (101), in particular an hinge correction.

7. Propeller according to any preceding claim, **characterized by** the fact that it comprises an outer propeller cover (46) from which the blades (48) will project outwards, and in that the pivot (52) is associated with a ring (103), fixed to the cover (46) and supporting said at least dynamic scoop (100), the ring (103) and said at least one dynamic scoop (100) being located radially inwards under the cover (46).

8. Propeller according to any preceding claim, **characterized by** the fact that it comprises an elastic return device capable of holding said at least dynamic scoop (100) in the closed position.

9. Turbomachine (1) **characterized by** the fact that it comprises a propeller (32) according to any preceding claim.

10. Turbomachine according to claim 9, **characterized by** the fact that said propeller (32) is located downstream from a combustion chamber (20) of said turbomachine, said turbomachine preferably comprising a pair of counter-rotating propellers, each of the two propellers (32, 36) being a propeller according to any one of claims 1 to 8.
